# EUROPÄISCHE PATENTSCHRIFT

(11) **EP 0 750 836 B1**
(45) Veröffentlichungstag und Bekanntmachung des Hinweises auf die Patenterteilung: **18.10.2000**
(21) Anmeldenummer: 96107045.5
(22) Anmeldetag: 04.05.1996
(51) Int. Cl.: A01G 3/053

(54) **Heckenschere**
Hedge trimmer
Taille-haie

(30) Priorität: 28.06.1995 DE 19522970
(43) Veröffentlichungstag der Anmeldung: 02.01.1997
(73) Patentinhaber: ROBERT BOSCH GMBH, 70442 Stuttgart (DE)
(72) Erfinder: Heywood, Peter, Dipl.-Ing., 70794 Filderstadt (DE); Achtzehnter, Helmut, 70597 Stuttgart (DE); Schoen, Klaus, 73776 Altbach (DE)

(56) Entgegenhaltungen:
- EP-A- 0 214 455
- EP-A- 0 622 015
- DE-U- 9 308 698
- GB-A- 2 291 744

## Beschreibung

### Stand der Technik

Die Erfindung geht aus von einer Heckenschere nach der Gattung des Anspruchs 1.

Durch die EP 0 214 455 ist eine gattungsgemäße Heckenschere mit zwei Handgriffen bekannt. Deren schwerpunktnaher, zweiter Handgriff ist ringförmig ausgebildet und steht seitlich und nach oben über die Gehäusekontur der Heckenschere hinaus. Er ist als gesondertes, zweischaliges Teil an das Gehäuse angeschraubt und trägt mehrere Tasten zur Betätigung eines Mikroschalters. Dadurch sind die Herstellung und die Montage der Heckenschere verhältnismäßig aufwendig. Außerdem bildet dieser Bügel-Handgriff ein erhebliches Zusatzgewicht für die Heckenschere und verteuert diese.

### Vorteile der Erfindung

Die erfindungsgemäße Heckenschere mit den kennzeichnenden Merkmalen des Anspruchs 1 hat demgegenüber den Vorteil, daß der zweite Handgriff vollständig in das Gehäuse integriert ist und daß die Herstellung, Lagerung und Montage einens zusätzlichen Teils für den Handgriff damit entfällt. Dadurch sind die Herstellungskosten deutlich geringer als bei gattungsgemäßen Heckenscheren. Außerdem ist die erfindungsgemäße Heckenschere leichter und handlicher, wobei der Handgriff dem Bedienenden im wesentlichen ebenso viele Griffpositionen bietet wie die aufwendigeren Bügel-Handgriffe der bekannten Heckenscheren.

Ein erheblicher Vorteil der Erfindung liegt auch darin, daß die Totmannschaltung besonder ergonomisch bedienbar ist, dadurch daß der Schalthebel des Schalters bei bestimmten Positionen der haltenden Hand sowohl mit dem Handballen als auch mit den Fingern bedienbar ist, weil der Schalthebel sich oberhalb des Handgriffs über diesen erstreckt und als von oben nach unten bewegbare Betätigungstaste ausgestaltet ist.

Weitere vorteilhafte Ausgestaltungen der Erfindung ergeben sich aus den abhängigen Ansprüchen.

### Zeichnung

Ein Ausführungsbeispiel der Erfindung ist in der nachfolgenden Beschreibung anhand der zugehörigen Zeichnung näher erläutert.

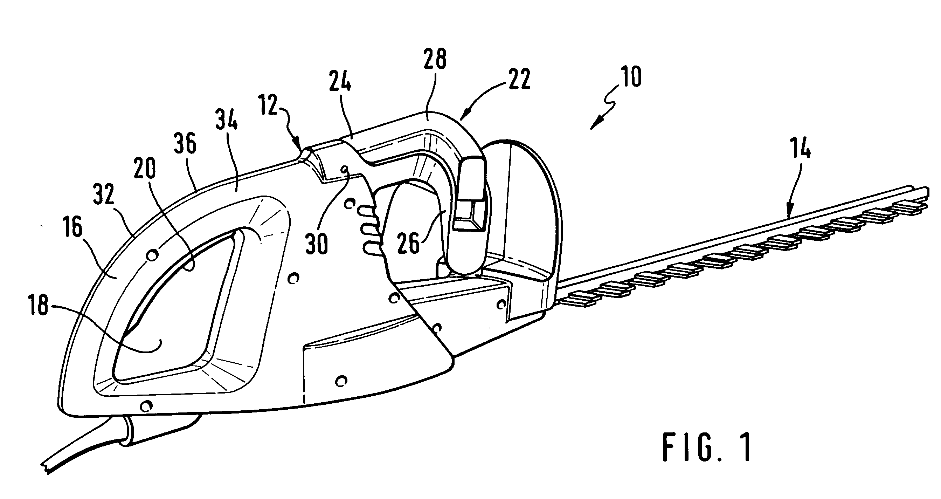

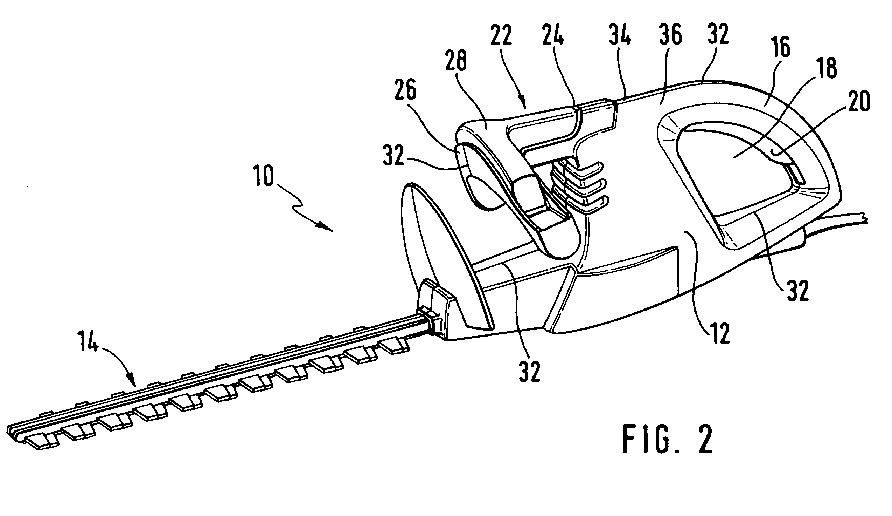

Es zeigen Figur 1 eine Seitenansicht der erfindungsgemäßen Heckenschere und Figur 2 eine schematische Ansicht von vorn.

### Beschreibung des Ausführungsbeispiels

Die in Figur 1 gezeigte Heckenschere 10 zeigt deren Gehäuse 12, aus dem nach vorn ein schematisch dargestelltes Heckenscherenmesser 14 austritt. Das Gehäuse 12 weist auf der dem Heckenscherenmesser 14 abgewandten Seite einen hinteren Handgriff 16 auf, der zusammen mit dem Gehäuse 12 eine geschlossene, ovale Eingriffsöffnung 18 bildet. Auf seiner Innenseite trägt der Handgriff 16 eine Schaltertaste 20 zum Ein- und Ausschalten des Antriebs der Heckenschere 10.

Die Taste 20 ist gegenüber dem Handgriff 16 quer zu dessen Kontur verschiebbar und taucht in diesen ein.

Vom C-förmigen Handgriff 16 ausgehend verläuft die obere Kontur des Gehäuses 12 längs, gerade nach vorn und endet in einem zweiten Handgriff 22. Dieser besteht aus einem stangenartigen, längsverlaufenden T-Stiel 24, der längs nach vorn in einen Querbalken 26 übergeht, dessen beiden Enden seitlich ausladend, nach unten gebogen verlaufen. Zwischen dem Querbalken 26 und dem Gehäuse 12 besteht derartiger Abstand, daß die Hand des Bedienenden leicht dazwischen Platz findet.

Der Handgriff 22 trägt auf seiner oberen Seite eine T-förmige Betätigungstaste 28, die der Längs- und Querkontur des Handgriffs 22 folgt. Die Betätigungstaste 28 ist vertikal nach unten gegenüber dem Handgriff 22 verkippbar um eine Kippachse 30, die im oberen Bereich des Gehäuses 12 benachbart zum Austritt des T-Stiels 24 angeordnet ist. Die Betätigungstaste 28 tritt mit ihrem dem Querbalken 26 abgewandten Seite in das Innere des Gehäuses 12 ein, wo sie über nicht dargestellte Betätigungsmittel mit einem Mikroschalter gekoppelt ist.

Mit dem gleichen Mikroschalter ist die Schaltertaste 20 gekoppelt. Nur wenn beide, d.h. die Schaltertaste 20 und die Betätigungstaste 20, 28 gleichzeitig niedergedrückt gehalten werden, ist die Heckenschere 10 betriebsbereit. Wird eine der Tasten 20, 28 losgelassen, stoppt der Heckenscherenantrieb augenblicklich.

In Figur 2 ist eine Ansicht der Heckenschere 10 schräg von vorn gezeigt, die die Zugriffsmöglichkeit auf den Querbalken 26 von oben und von der Seite verdeutlicht. Die nach unten gebogenen Seiten des Querbalkens 26 des Handgriffs 22 und die auf seiner Oberseite angeordnete Betätigungstaste 28 sind deutlich erkennbar. Außerdem ist ersichtlich, daß die Betätigungstaste 28 in den Handgriff 22 eintauchen kann. Darüberhinaus zeigt eine Trennfuge 32, daß das Gehäuse 12 der Heckenschere 10 aus längs gefügten Halbschalen 34, 36 besteht, wobei auch der Handgriff 22 hälftig zu je einer Halbschale 32, 34 gehört.

Bei seitlich am Handgriff 22 angreifender Bedienhand kann mit deren Daumen die Betätigungstaste 28 niedergedrückt gehalten werden. Diese Position ist besonders vorteilhaft bei vertikalem Schneiden von Hecken.

Bei am Handgriff 22 von oben angreifender Bedienhand kann mit deren Handballen die Betätigungstaste 28 niedergedrückt gehalten werden, wobei der Bedienende über der Schnittkante der Hecke steht. DiesePosition ist besonders vorteilhaft bei horizontalem Heckenschnitt.

Unter bestimmten Bedingungen kann es auch vorteilhaft sein, mit der Bedienhand den T-Stiel (24) der Handgriffs 22 zu umgreifen und in dieser Position zu arbeiten, wenn damit besser gearbeitet werden kann als mit Griffpositionen an den übrigen beiden Griffschenkeln.

Daraus wird deutlich, daß der T-förmige, gekrümmte vordere Handgriff 22 in der Vielfältigkeit der Handhabbarkeit den aufwendigeren Bügelgriffen entspricht.

## Patentansprüche

1. Heckenschere (10) mit einen Gehäuse (12), aus dem längs nach vorn ein Heckenscherenmesser (14) tritt, mit zwei Handgriffen (16, 22) mit je einem Schalthebel (20, 28), wobei einer der Handgriffe (16, 22) zum Halten und der andere zum Führen der Heckenschere dient und wobei beide Schalthebel (20, 28) zum Ein-/Aus-Schalten des Antriebs der Heckenschere (10) und zur Zweihandbedienung einer als Totmannschaltung bezeichneten Sicherheitseinrichtung dienen und zum Betreiben der Heckenschere (10) unabhängig voneinander niedergedrückt gehalten werden müssen, dadurch gekennzeichnet,
daß der Handgriff (22) zum Halten der Heckenschere (10) sich längs zu dieser mit einem T-Stiel (24) nach vorn T-förmig erstreckt, an den sich vorn ein Querbalken (26) anschließt, wobei der T-Stiel (24) gemeinsam mit dem Querbalken (26) drei Griffschenkel bildet, wobei die zwei Griffschenkel des Querbalkens (26) seitwärts nach unten gebogen verlaufen.

2. Heckenschere nach Anspruch 1, dadurch gekennzeichnet, daß der Handgriff (22) zum Halten, zumindest teilweise, ein einstückiger Teil des Gehäuses (12) ist.

3. Heckenschere nach Anspruch 2, dadurch gekennzeichnet, daß das Gehäuse (12) längsgeteilt aus zwei Halbschalen (34, 36) besteht und daß der Handgriff (22), insbesondere der T-Stiel (24), ebenfalls längsgeteilt ist, wobei jeder Griffschenkel des Querbalkens (26) zu einer Halbschale (34, 36) gehört.

4. Heckenschere nach Anspruch 3, dadurch gekennzeichnet, daß der Handgriff (22) ein nach oben offenes Hohlprofil bildet.

5. Heckenschere nach Anspruch 4, dadurch gekennzeichnet, daß der Schalthebel (28) im Hohlprofil des Handgriffs (22) geführt ist, dieses nach oben schließt und durch eine dessen Kontur folgende T-förmige Betätigungstaste (28), insbesondere mit seitlich abwärts gebogenen Enden, gebildet wird.

6. Heckenschere nach Anspruch 5, dadurch gekennzeichnet, daß die Betätigungstaste (28) nach oben über die Kontur des Handgriffs (22) hinaussteht und gegenüber diesem nach unten bewegbar angeordnet ist.

7. Heckenschere nach Anspruch 5 oder 6, dadurch gekennzeichnet, daß die Betätigungstaste (28) drei den Griffschenkeln des Handgriffs (22) entsprechende Tastenbereiche aufweist.

8. Heckenschere nach einem der Ansprüche 5 bis 7, dadurch gekennzeichnet, daß die Betätigungstaste (28) als Kipptaste ausgestaltet ist, deren Kippachse (30) am Ende des T-Stiels (24) auf der dem T-Querbalken (26) des Handgriffs (22) abgewandten Seite im Gehäuse (12) angeordnet ist.

9. Heckenschere nach einem der Ansprüche 5 bis 8, dadurch gekennzeichnet, daß die Kontur der Betätigungstaste (28) in die des Gehäuses (12) übergeht.

10. Heckenschere nach einem der Ansprüche 5 bis 9, dadurch gekennzeichnet, daß die Betätigungstaste (28) im Handgriff (22), insbesondere seitlich im Hohlprofil, geführt angeordnet ist.

## Claims

1. Hedge trimmer (10) having a housing (12), from a which a hedge trimmer blade (14) emerges lengthwise to the front, having two handles (16, 22) with one switch lever (20, 28) each, one of the handles (16, 22) serving to hold and the other serving to guide the hedge trimmer, and both switch levers (20, 28) serving to switch the drive of the hedge trimmer (10) on and off and being used for the two-handed operation of a safety device designated as dead man's circuit and having to be kept depressed independently of one another in order to operate the hedge trimmer (10), characterized in that the handle (22) for holding the hedge trimmer (10) extends forwards in a T-shape lengthwise relative to the latter with a T-stem (24), adjoining which at the front is a crossbar (26), the T-stem (24) together with the crossbar (26) forming three gripping legs, the two gripping legs of the crossbar (26) running sideways and downwards in a curved manner.

2. Hedge trimmer according to Claim 1, characterized in that the handle (22) for holding is at least partly a one-piece part of the housing (12).

3. Hedge trimmer according to Claim 2, characterized in that the housing (12) is split longitudinally and consists of two half shells (34, 36), and in that the handle (22), in particular the T-stem (24), is likewise split longitudinally, each gripping leg of the crossbar (26) belonging to a half shell (34, 36).

4. Hedge trimmer according to Claim 3, characterized in that the handle (22) forms a hollow section open at the top.

5. Hedge trimmer according to Claim 4, characterized in that the switch lever (28) is guided in the hollow section of the handle (22), closes the latter at the top and is formed by a T-shaped actuating button (28) following the contour of the handle (22), and in particular having ends curved laterally downwards.

6. Hedge trimmer according to Claim 5, characterized in that the actuating button (28) projects upwards beyond the contour of the handle (22) and is arranged so that it can move downwards relative to the latter.

7. Hedge trimmer according to Claim 5 or 6, characterized in that the actuating button (28) has three button regions corresponding to the gripping legs of the handle (22).

8. Hedge trimmer according to one of Claims 5 to 7, characterized in that the actuating button (28) is configured as a tilting button, the tilting axis (30) of which is arranged in the housing (12) at the end of the T-stem (24) on the side remote from the T-crossbar (26) of the handle (22).

9. Hedge trimmer according to one of Claims 5 to 8, characterized in that the contour of the actuating button (28) merges into that of the housing (12).

10. Hedge trimmer according to one of Claims 5 to 9, characterized in that the actuating button (28) is arranged so as to be guided in the handle (22), in particular laterally in the hollow section.

## Revendications

1. Taille-haie (10) avec un carter (12), d'où sort longitudinalement vers l'avant une lame de taille-haie (14), comprenant deux poignées (16, 22) avec chacune un levier de commande (20, 28), l'une des poignées (16, 22) servant à maintenir et l'autre à guider le taille-haie, dans lequel les deux leviers de commande (20, 28) servant à mettre en marche/arrêt le moteur d'entraînement du taille-haie (10), doivent être maintenus pressés vers le bas indépendamment l'un de l'autre pour actionner à deux mains un dispositif de sécurité désigné sous le nom de circuit d'homme mort et pour faire fonctionner le taille-haie (10),
caractérisé en ce que
la poignée (22) se poursuit vers l'avant pour tenir le taille-haie (10) dans le sens de la longueur par un manche (24) en forme de T, auquel se raccorde une traverse (26) à l'avant, le manche en forme de T (24) en même temps que la traverse (26) formant trois branches de saisie, les deux branches de saisie de la traverse (26) s'étendant latéralement en étant repliées vers le bas.

2. Taille-haie selon la revendication 1,
caractérisé en ce que
la poignée (22) sert à maintenir, au moins en partie, une pièce du carter (12) d'un seul tenant.

3. Taille-haie selon la revendication 2,
caractérisé en ce que
- le carter (12) se compose de deux demi-coquilles (34, 36) partagées longitudinalement et
- la poignée (22), en particulier le manche en forme de T (24), est également partagée dans le sens de la longueur, chaque branche de la traverse (26) faisant partie d'une demi-coquille (34, 36).

4. Taille-haie selon la revendication 3,
caractérisé en ce que
la poignée (22) présente un profil creux ouvert vers le haut.

5. Taille-haie selon la revendication 4,
caractérisé en ce que
le levier de commande (28) est guidé dans le profil creux de la poignée (22), ferme celui-ci vers le haut, et est formé par un poussoir d'actionnement (28) en forme de T, qui suit son contour, en particulier avec des extrémités repliées vers le bas latéralement.

6. Taille-haie selon la revendication 5,
caractérisé en ce que
le poussoir d'actionnement (28) fait saillie vers le haut au-dessus du contour de la poignée (22) et est disposé à l'opposé de celle-ci de façon mobile vers le bas.

7. Taille-haie selon la revendication 5 ou 6,
caractérisé en ce que
le poussoir d'actionnement (28) présente trois zones qui correspondent aux branches de la poignée (22).

8. Taille-haie selon l'une des revendications 5 à 7,
caractérisé en ce que
le poussoir d'actionnement (28) est constitué sous la forme d'un poussoir basculant, dont l'axe de basculement (30) est disposé dans le carter (12) à l'extrémité du manche en forme de T (24) sur le côté opposé à la traverse (26) de la poignée (22).

9. Taille-haie selon l'une des revendications 5 à 8,
caractérisé en ce que
le contour du poussoir d'actionnement (28) se prolonge pardessus celui du carter (12).

10. Taille-haie selon l'une des revendications 5 à 9,
caractérisé en ce que
le poussoir d'actionnement (28) est disposé en étant guidé dans la poignée (22), en particulier latéralement dans un profil creux.
